# EUROPEAN PATENT SPECIFICATION

(11) **EP 2 956 380 B1**
(45) Date of publication and mention of the grant of the patent: **25.01.2017**
(21) Application number: 14708103.8
(22) Date of filing: 18.02.2014
(51) Int. Cl.: B65D 75/58, B65D 47/26, A61J 1/10, A61J 1/14, A61J 1/20, H02G 15/00, H02G 15/18

(54) **DISPOSABLE AND COLLAPSIBLE BAG PACKAGING AND CONNECTOR SYSTEM AND METHOD**
WEGWERFBARE UND ZUSAMMENKLAPPBARE BEUTELPACKUNG UND VERBINDERSYSTEM UND VERFAHREN
EMBALLAGE À POCHE SOUPLE JETABLE, ET SYSTÈME ET PROCÉDÉ DE RACCORDS

(30) Priority: 18.02.2013 NL 2010319; 18.02.2013 NL 2010320
(43) Date of publication of application: 23.12.2015
(73) Proprietor: Filoform B.V., 4191 GW Geldermalsen (NL)
(72) Inventor: IPENBURG, Willem, NL-3438 VG Nieuwegein (NL)
(74) Representative: EP&C
(86) International application number: PCT/NL2014/050098
(87) International publication number: WO 2014/126473

(56) References cited:
- EP-A1- 0 287 716
- EP-A1- 0 654 419
- EP-A1- 2 645 500
- WO-A1-2009/020393
- WO-A1-2012/033405
- DE-A1- 4 241 137
- GB-A- 2 316 979
- NL-C1- 1 002 859
- US-A- 5 425 479
- US-A1- 2005 072 804
- US-A1- 2012 267 393

## Description

The present invention relates to disposable and collapsible bag packaging and connector system and method for a flowable resin compound product.

EP 654 419 discloses a packaging bag and connector system according to the preamble of claim1 wherein a first chamber is filled with a first product component and a second chamber of the container is filled with a second product component, the first and second chamber being separated by a temporary barrier, e.g. a breakable seal or a removable clamp, allowing to bring the chambers into communication in order to mix the product components prior to discharge of the mixed product from the bag.

In the field it is known to provide the bag with a female connector with a bore into which a male connector is to be introduced. The female connector is provided with a plug that seals the bore, which plug is pushed inward from its seat by the male connector. In the introduction motion of the male connector, the plug couples to the head of the male connector. This allows the plug to be returned into its seat when the product bag is disconnected from the male connector. Thereby the bag is closed again.

In another presently available system, the bag is provided with a female connector having a containment membrane therein that seals the chamber of the bag. The male connector is provided with a part having piercing teeth. Both connectors are screwthreaded and upon screwing the bag onto the male connector, the piercing teeth rupture the containment membrane so as to allow for discharge of the product from the bag.

It is desired to further improve the systems of this type in view of e.g. chance of product wastage, skin contact, etc. It is further desirable to enhance the user friendliness of the system.

The present invention therefore aims to provide an improved system.

The present invention proposes a system according to claim 1.

The inventive system enhances user friendliness and provides enhanced reduction of the risk of product wastage and skin contact. This is achieved by combining the ease of a bayonet connection between the bag and the second connector with the resulting simultaneous actuation of the rotary valve member such that this rotary valve opens only during the last stage of fastening of the bayonet connection and closes during the first stage of the release of the bayonet connection. This means that the valve is only open when it is assured that the bag is fastened onto the second connector by means of the bayonet connection. Once the product has been dispensed and the bag is removed, the rotary valve is reclosed automatically and reliably whereby any residue is safely held in the closed bag. The rotary valve reliable closes the bag.

WO2009/020393 discloses a bag used for printing ink having a first connector that is to be connected to a second connector, said first and second connectors having the features of the characterizing portion of claim 1.

Preferably, the angular motion towards the final connected position is over about a quarter turn, e.g. between 60° and 120°. This allows for a convenient operation, e.g. compared to a screw connection which requires several full turns.

In a practical embodiment the bag is to be squeezed by hand in order to expel the product from the bag, but one can also envisage other means to compress the bag or even the provision of a pump that sucks the product from the bag via the connectors.

In an embodiment the first connector is a female connector and the second connector is a male connector, wherein the first connector comprises a bore into which the male connector is insertable in axial direction via an insertion opening of the bore, and wherein the rotary valve member is journaled in said bore, and wherein the first coupling portion of the rotary valve member- when the valve member is in its first angular position - is adapted to couple directly to a second coupling portion on the male connector upon of insertion of the male connector into the bore in the axial direction. This version is preferred as it enhances intuitive use by the user.

In an embodiment the first connector has a base body that is provided with at least one port that adjoins the chamber of the bag, and the rotary valve member comprises a passage, preferably within the valve member but optionally as a groove or the like on the outside of the body, which passage in the first angular position is not in aligned with the port and which in the second angular position is aligned with the port so that the product can be dispensed from the bag.

In a further development thereof the rotary valve member has a tubular body part that is journaled within the base body of the first connector, which tubular body part is open at an end facing the second connector, and which is closed by a top wall at the other end, wherein one or more ports are formed laterally in the tubular body part, and wherein the one or more ports in the base are each aligned with a port in the tubular body part in the second angular position of the rotary valve member.

In a further development the rotary valve member comprises an annular skirt extending around the tubular body part at an the end thereof facing the second connector, a gap being present between said annular skirt and the tubular body part, into which gap an end region or forward end portion of the second connector is inserted during axial insertion of the second connector into a bore of the first connector.

In an embodiment the rotary valve member has a tubular body part that is adapted to extend with a part thereof into the second connector, a face of the tubular body part that is adapted to extend into the second connector and a face of the second connector are embodied being embodied as sealing faces so as to form a seal when the connectors are interconnected.

In a practical embodiment the second connector has at least one bayonet connector slot, preferably two bayonet connector slots at diametrically opposed locations of the second connector.

Preferably the one or more bayonet connector slots on the second connector are provided on an external surface thereof so as to be easily visible for the user which enhances the intuitive operation of the connector system.

Preferably the first connector has one or more corresponding bayonet pins, each slot of the second connector having an axial slot section and a circumferential slot section. The axial slot section may be oriented truly axial but an inclined orientation of said section towards the bend where the circumferential slot section starts is also possible. The circumferential slot section may equally extend in a plane normal to the axial direction, but may also be inclined relative to said plane when desired.

In an embodiment the circumferential slot section is provided with a retaining obstacle, e.g. a dam, over which the pin is urged during relative rotation of the first and first connectors, which dam provides resistance against reverse motion that releases the connectors.

In an embodiment the rotary valve member comprises one or more, preferably two at diametrically opposed locations, coupling bosses which each are, when seen in axial insertion direction of the connectors, axially aligned with a bayonet pin and behind said pin when in the first angular position, the coupling boss being arranged such that - when the one connector is axially inserted into the other connector- the coupling boss enters the axial slot section and remains in said axial slot section, whereas the bayonet pin becomes aligned with the circumferential slot section so as to allow for a subsequent relative rotation between the connectors in order to establish the bayonet connection.

In an embodiment the rotary valve member has a tubular portion and a coaxial skirt at the end of the tubular portion facing the second connector, a gap being present between the skirt and the tubular portion, wherein the skirt of the rotary valve member has an abutment portion, that abuts in circumferential direction against a bayonet pin of the first connector when the rotary valve member is in its first angular position.

In an embodiment first connector is a female connector comprising a base body having a bore into which the male connector is insertable in an axial direction via an insertion opening of the bore. The rotary valve member is journaled within the bore of the base body. The valve member has a tubular body part that is open at an end facing the insertion opening for the male connector and a top wall is present at the other end of the tubular body part. For example one or more ports are formed laterally in the tubular body part or in the top wall of the tubular body part. In the first angular position of the valve member the one or more ports of the valve member are not aligned with the one or more ports in the base body so that the bag is closed. In the second angular position the alignment is established so that the bag is open and product can flow from the bag into the interior of the tubular valve member and the adjoining interior channel of the male connector.

In an embodiment the tubular body part of the rotary valve member that is journaled in the bore of the female connector member is provided with one or more axially protruding bosses at the open end of the tubular body part, which - when the valve member is in its first angular position - are adapted to couple directly to a second coupling portion on the male connector, for example one or more recesses on the other connector member which each receive a boss therein, upon axial insertion of the male connector into the bore in the axial direction. Preferably each coupling boss has beveled sides and each coupling recess has corresponding beveled sides enhancing the introduction of a boss into a recess.

In an embodiment the male connector has a forward tubular portion at a forward end of the connector that is adapted to sealingly fit into a tubular body part of the rotary valve member. As is preferred this forward tubular portion is provided on its exterior with one or more circumferential sealing ribs that provide a seal with the interior of the tubular part.

In embodiment the male connector has a forward tubular portion at a forward end of the connector that is adapted to sealing fit into a tubular part of the rotary valve member and the male connector has, rearward from the forward tubular portion, said first coupling portion, e.g. formed by one or more recesses, which first coupling portion is adapted to cooperate with a second coupling portion of the valve member, e.g. formed by one or more axially protruding bosses at the open end of the tubular body part of the rotary valve member.

Preferably the male connector has - on an exterior thereof and forward of the first coupling portion - one or more circumferential sealing ribs that sealingly engage the interior of the tubular part of the rotary valve member so that product flowing through the interconnected connectors is prevented from reaching the region where the first and second coupling portions interengage.

In an embodiment the second connector is provided with an inlet valve in the internal channel thereof, which inlet valve is normally closed and which is adapted to be opened by interconnection of the first and first connector or, alternatively, by product flow from the bag into the housing. For example, a biasing spring is mounted between the inlet valve and the second connector, which biases the inlet valve into its closed position.

Possibly the bag is at least partly transparent, e.g. to allow the user to see whether the kneading and/or mixing of the product prior to discharge of the product from the bag is completed.

If desired the collapsible bag is packaged in an outer protective packaging, e.g. a packaging envelope of aluminum foil or a foil containing an aluminum or other metal layer to provide an enhanced barrier, e.g. as an oxygen barrier, from which the bag is removed when it is to be used. In another embodiment the bag wall includes a metal barrier layer, e.g. sandwiched between plastic layers.

If desired a removable covering, e.g. a foil seal or a cap, is placed on/over the first connector to provide extra shielding during transport and storage, the covering being removed prior to mating the first and second connector.

The collapsing of the bag to expel the product may be done by squeezing the bag directly by hand, but in another, known, approach use may be made of a pump to discharge the product from the bag, e.g. the pump compressing the bag or the pump sucking the product from the bag. In another embodiment the bag comprises a further chamber that is to be filled with pressurized medium, e.g. air, to expel the product from one or more other chambers of the bag.

For example the bag has a product volume between 0.1 and 3 liters.

In a practical embodiment the first connector has a base body that is permanently secured to the bag, e.g. sealed to a wall of the bag or between two opposed walls of the bag. For example the base body has a central portion, e.g. circular or oval, wherein the bore is present, and possibly fins that protrude in opposite directions from the central portion. The central portion and any fins are preferably sealed between opposed walls of the bag. For example the sealing is done by heat-sealing or ultrasonic welding to permanently secure the first connector to the bag.

The bag of the system can for example be filled with a resin compound allowing the system to be employed as a cable jointing or cable terminal end system, allowing to establish a joint or terminal end of one or more cables, e.g. electrical or optical cables. The system can for example also be embodied for use in resin compound filled joints or terminal ends of pipes, e.g. pipes conducting a gas or liquid. The system can for example also be embodied to be used in establishing a resin compound based seal, e.g. to seal penetrations of cables or pipes through partitions, to seal gaps in constructions, e.g. in building industry, etc., for example as a fire or barrier seal. Resin compounds are also employed to as bonding or adhesive agent.

For example in the field of the preparation of insulated electric cable joints and electrical cable terminal ends it is known to use squeezable containers embodied as bags, which bags have at least one chamber filled with an electrically insulating resin compound.

As is known, use is made of dual chamber bags, wherein a first chamber of the bag is filled with a first resin component and a second chamber of the bag filled with a second resin component, the first and second chamber being separated by a temporary barrier, e.g. a breakable seal or a removable clamp, allowing to bring the chambers into communication in order to mix the components prior to discharge of the mixed resin from the bag.

The resin compound is dispensed by squeezing the bag, e.g. manually or by means of a pump. The resin compound then is discharged into a cable joint housing in which a completed cable joint is received, so that the housing is filled with the cable joint resin and the cable joint becomes embedded in the resin. Common resin compounds are curable, normally cold curing, resins that harden over time.

As indicated above, similar joint or terminal end systems are employed for delivery of resin compound that seal and/or insulate pipe joints and pipe terminal ends, e.g. to ensure a complete sealing of the pipe joint or pipe terminal end.

In an embodiment - as is known in the art - the transfer member is provided with an inlet valve in the internal channel thereof, which inlet valve is normally closed and which is adapted to be opened by interconnection of the first and second connector or, alternatively, by resin compound flow into the channel. For example, a biasing spring is mounted between the inlet valve and the body of the transfer member, which biases the inlet valve into its closed position.

In an embodiment the transfer member forms a joint or terminal end housing member that is adapted to form by itself or in combination with one or more additional housing members a joint or terminal end housing in which a cable or pipe joint or a cable or pipe terminal end is received, e.g. of electrical cable(s), optical cable(s), or of pipe(s), which housing is to be filled with the resin compound to embed the joint or terminal end therein.

In an embodiment - as is known in the art - the transfer member comprises a plate body part, preferably a curved plate body part, e.g. semi-cylindrical, from which the male connector protrudes. This embodiment is e.g. advantageous in an embodiment - as is known in the art - wherein the housing further comprises an open structure gauze that is adapted to be wound around the electrical cable(s) to be joined or terminated and possibly about the plate body part, the housing further comprising a plastic tape that is to be applied to form a liquid-tight outer envelope of the housing, wherein the resin is to be supplied via the transfer member.

The present invention also relates to a method for manufacturing a joint or terminal end, wherein use is made of a system according to the invention.

The invention will now be explained with reference to the drawings. In the drawings:

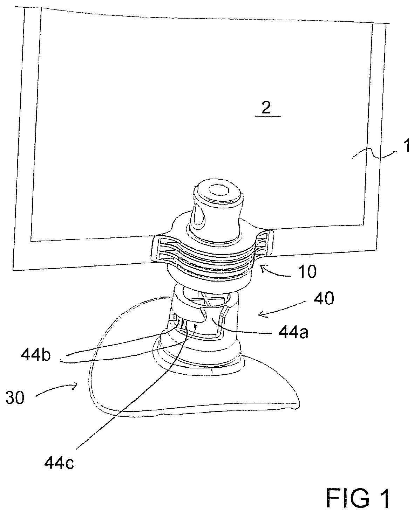

Fig. 1 shows an example of a system according to the invention,
Fig. 2 illustrates a two-chamber bag version,

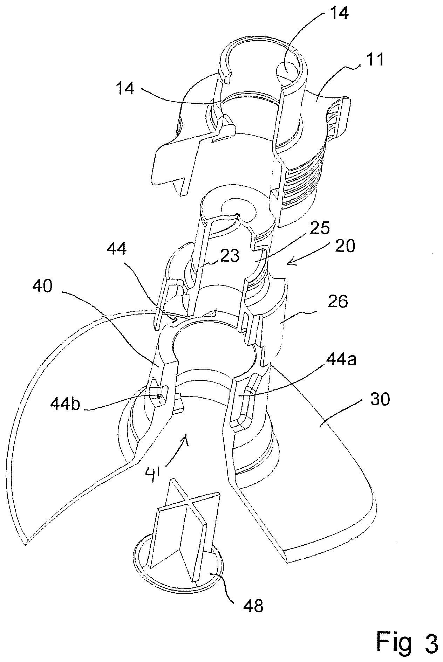

Fig. 3 shows an exploded view of the female connector and housing member with male connector of the system of fig. 1, a portion being cut away for clarity,
Fig. 4 shows female connector and housing member of fig. 3 with assembled parts prior to connection of the male and female connectors,
Fig. 5a and 5b show, in different views, the male and female connectors of fig. 4 after axial insertion of the male connector into the female connector,
Fig. 6. shows the male and female connectors of fig. 5a, 5b after relative rotation of the connectors so that the final connected position has been reached,
Fig. 7a shows the female connector of fig. 6 with the rotary valve member in its first angular position,
Fig. 7b shows the body of the female connector of fig. 4,
Fig. 7c shows the rotary valve member of the female connector of fig. 4,
Fig. 8a shows the connectors in the situation of figs. 5a, 5b from a different angle with a further portion cut away to illustrate the location of the bayonet pin of the body of the female connector and the boss of the rotary valve member,
Fig. 8b shows a view corresponding to fig. 8a after the relative rotation of the connectors so that the final connected position has been reached.

With reference to the drawings examples of a system according to the invention will be discussed.

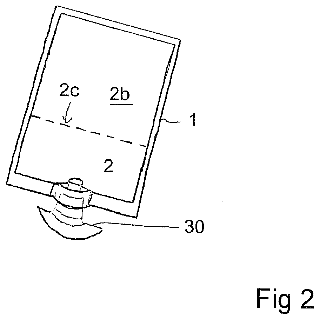

The system comprises a disposable and collapsible bag 1 as is preferred. The bag has at least one chamber 2 that is filled with a flowable product. Figure 2 shows a dual chamber bag with two chambers 2, 2b separated by a temporary barrier 2c.

The system further comprises an article from which a male connector 40 protrudes. The article is here embodied with a plate body part 30, that is integrally molded with the male connector 40 from plastic material.

As discussed above, the bag 1 may be introduced into a device which is adapted to compress the bag 1 in order to expel the product. In another approach the bag 1 is squeezed directly by hand. Otherwise the connector 40 may lead to a pump, which sucks the product from the bag.

The male connector 40 has an internal channel 41 for the passage of the product. As is preferred the male connector 40 is injection molded of plastic material.

The bag 1 is provided with a female connector 10 for dispensing the product from the chamber 2.

The female connector 10 comprises a base body 11, as is preferred injection molded of plastic material, with a bore 12 into which the male connector 40 of the housing member 30 is insertable in an axial direction via an insertion opening 12a of the bore 12.

A rotary valve member 20, as is preferred injection molded of plastic material, is journaled to the base body 11 of the female connector 10, here generally arranged within the bore 12 of the base body 11 in rotatable manner.

In this practical embodiment the base body 11 is permanently sealed between two opposed walls of the bag 1. In this example the base body has a central, here an circular portion, and fins that protrude in opposite directions from the central portion. The central portion and the fins are sealed between the opposed walls of the bag. For example the sealing is done by heat-sealing or ultrasonic welding to permanently secure the first connector to the bag.

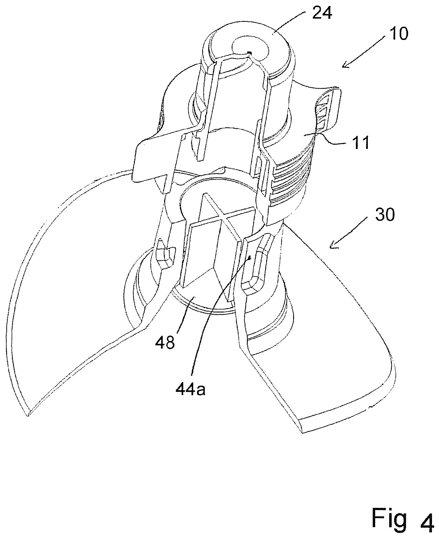

In a first angular position of the valve member 20 relative to the base body 11 of the female connector 10 (figures 4, 5a, 5b, 7a, 8a) the valve member 20 seals or closes the chamber 2 of the bag 1 so that chamber 2 is not connected to the bore 12.

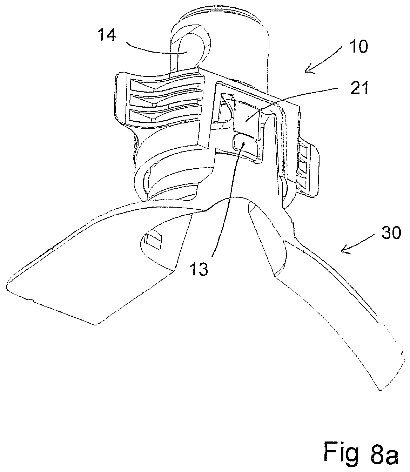

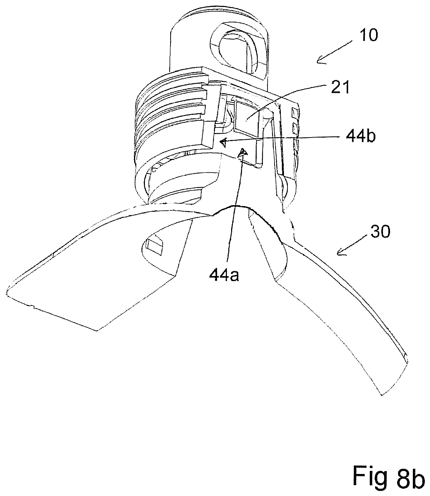

The rotary valve member 20 comprises a first coupling portion, here a boss 21, which - when the valve member 20 is in its first angular position - is adapted to couple directly to a second coupling portion 44a on the male connector 40 upon axial insertion of the male member 40 into the bore in the axial direction. This is illustrated in figures 8a, b as will be explained further below.

The male connector 40 comprises a second bayonet connection portion, here formed by two bayonet connector slots 44 at diametrically opposed locations of the male connector 40, as is preferred on an external surface of the male connector 40. Each slot 44 has an axial slot section 44a and a circumferential slot section 44b.

The female connector 10 has a base body 11 that is provided with one or more corresponding bayonet pins 13, here two pins 13 at diametrically opposed position on an internal surface of the body, inwardly protruding into the bore 12 of the female connector 10.

As is shown here, the circumferential slot section 44b is provided with a retaining obstacle, here a dam 44c, over which the pin 13 is urged during relative rotation of the connectors. This dam 44c provides resistance against reverse motion that releases the connectors.

The male and female connectors 10, 40 are hereby directly mechanically interconnectable by axial insertion of the male connector 40 into the bore 12 of the female member 10, followed by rotation over an angle of the female connector 10 relative to the male connector 40 so that the pins 13 reached their final connected position at the blind end of the circumferential slot section 44b. This position is visible in figures 2, 6, 8b.

As can be seen best in figure 8a and 8b the rotary valve member 20 is held stationary in angular direction relative to the male connector 40 by the cooperating first and second coupling portions, here the boss 21 in the axial slot section 44a as is preferred. As a result thereof - upon the rotation over an angle to the final connected position of the female connector 10 relative to the male connector 40 - the valve member is rotated to a second angular position relative to the base body 11 of the female connector 10.

The rotary valve member 20 is embodied to provide - in this second angular position - for communication between the chamber 2 of the bag and the internal channel 41 in the male connector 40 and so allows for discharge of the product from the chamber 2 into the internal channel 41 and there along.

The bag 1 can be removed by disconnecting the bayonet connection. This involves first rotation of the bag 1 and the female connector 10 in reverse direction, until the pin 13 becomes aligned with the axial slot section 44a. Due to this motion, the valve member is brought into its first angular position again so that the bag 1 is now closed. Then the bag 1 is lifted from the male connector 40 in axial direction, wherein the pin 13 passes through and out of the slot section 44a.

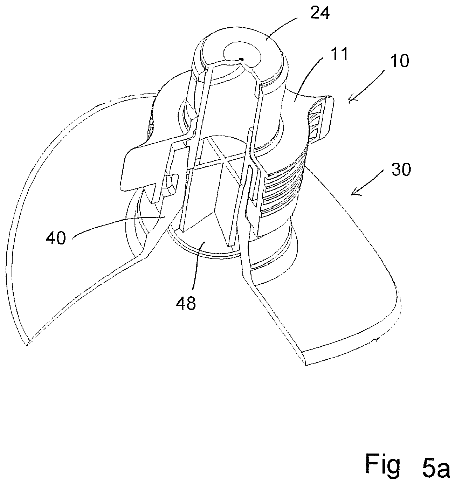

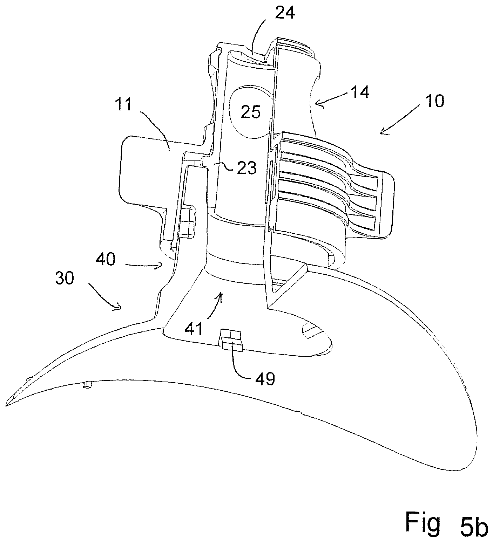

As can be seen in e.g. fig. 5 the male connector is provided with an inlet valve 48 in the internal channel 41 thereof, which inlet valve is normally closed and which is adapted to be opened by interconnection of the connectors or, alternatively, by product flow from the bag 1 into the housing. For example a biasing spring (not shown for clarity) is placed underneath the valve 48, e.g. resting on lugs 49 inward in the channel 41.

The base body 11 of the connector 10 is provided with at least one, here two diametrically opposed, ports 14 that adjoin the chamber 2 of the bag 1.

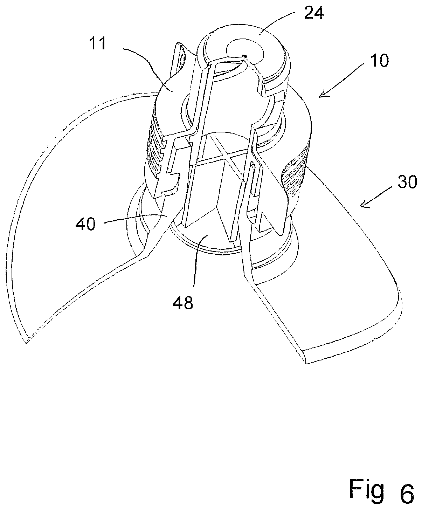

The rotary valve member 20 has a tubular body part 23 that is journaled within the base body 11 of the connector 10. This tubular body part 23 is open at an end facing the insertion opening 12a for the male connector 40, and is closed by a top wall 24 at the other end of the part 23. One or more ports 25, here two at diametrically opposed locations, are formed laterally in the tubular body part 23. In the first angular position (fig. 5a, 5b, 8a) of the valve member 20 the ports 25 are not aligned with the ports 14 in the base body 11 so that the bag 1 is closed. In the second angular position (fig. 6, 8b) the ports in the base body are each aligned with a port 25 in the tubular body part 23 so that the bag 1 is open and product can flow from the bag 1 into the channel 41 of the male connector 40.

As shown here the rotary valve member 20 comprises an annular skirt 26 extending around the tubular body part 23 at an the end thereof facing the insertion opening 12a for the male connector 40. A gap 27 is present between the annular skirt 26 and the tubular body part 23. As can be seen in e.g. figure 5a, 5b, 6 this gap 27 receives an end region of the male connector 40 during axial insertion of the connector 40 into the bore of the connector 10.

A face 28 of a part of the tubular body part 23 that is adapted to extend into the connector 40 and a face of the connector 40 are embodied as sealing faces so as to form a seal when the connectors 10, 40 are interconnected.

When the valve member 20 is in its first angular position, as shown in figure 8a, the coupling bosses 21 each are, when seen in axial insertion direction of the connectors 10, 40, axially aligned with a bayonet pin 13 and behind the pin 13. The coupling bosses 21 are arranged such that - when the one connector 40 is axially inserted into the other connector 10 - the pin 13 and then the coupling boss 21 enter the axial slot section 44a. The bayonet pin 13 becomes aligned with the circumferential slot section 44b so as to allow for a subsequent relative rotation between the connectors 10, 40 in order to establish the bayonet connection. But the boss 21 remains in the axial slot section 44a and thus prevents the valve member 20 from rotation relative to the male connector 40.

In order to establish the first angular position in reliable manner, the skirt 26 of the rotary valve member 20 has an abutment portion 26a, that abuts in circumferential direction against a bayonet pin 13 of the connector 10 when the rotary valve member 20 is in its first angular position.

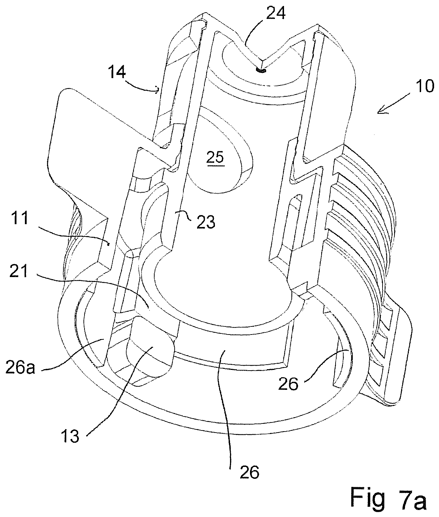

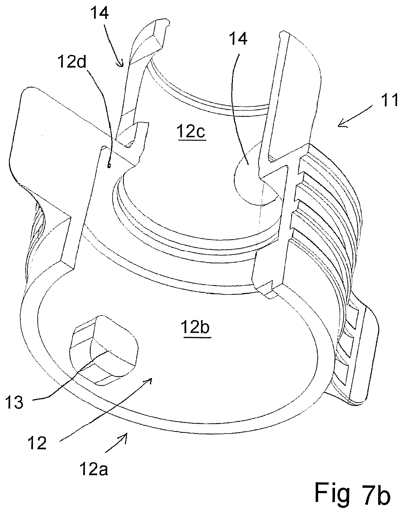

Figure 7b illustrates that the bore 12 of the female connector 10 has - when seen in insertion direction of the male connector 40 - a first large diameter bore section 12b and a second smaller diameter bore section 12c, with a shoulder 12d being present forming a transition between said first and second bore sections 12b, 12c. The rotary valve member 20 has a circumferential collar wall 28 extending between the tubular body part 23 that fits into the second bore section 12c and the skirt 26 that fits into the first bore section 12b, said collar wall extending along the shoulder 12d.

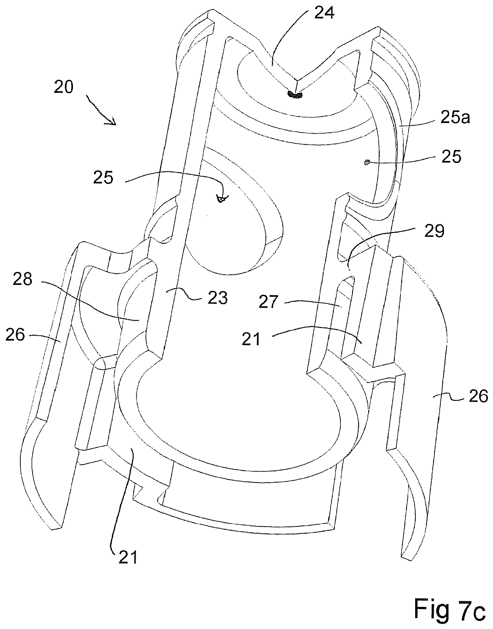

As can be seen in figure 7c an outwardly protruding rib 25a extends around each port 25 which optional feature serves to enhance sealing between valve member 20 and the base body 11 so that no product can enter between these parts.

## Claims

1. A disposable and collapsible bag packaging and connector system comprising:
- a disposable and collapsible bag (1), having at least one chamber (2) that is filled with a flowable resin compound product, e.g. an electrically insulating resin compound product, wherein the bag is adapted to be squeezed in order to expel the resin compound from the chamber, a first connector (10;110;110') for dispensing the product from the at least one chamber (2) of the bag, the first connector (10;110;110') having a base body (11;111;111') that is secured to the bag,
- a second connector (40;140) provided on a resin compound transfer member (30;100), which transfer member (30;100) has an internal channel (41) for passage of the resin compound that is expelled from the bag (1) by squeezing, said channel (41) having an outlet, said second connector (40;140) being releasably connectable to the first connector,
**characterized in that**
that the first connector (10;110;110') comprises a first bayonet connection portion (13;144) and the second connector (40;140) comprises a second bayonet connection portion (44, 44a, 44b;113), so that the first and second connectors (10,40;110,140;110',143) are interconnectable by axial insertion of one of the first and second connectors into a bore (12;112) of the other connector, followed by a rotation over an angle of said inserted connector (40;140) relative to said other connector (10;110;110') so that the first and second bayonet connection portions reach a final connected position,
wherein the first connector (10;110;110') comprises a rotary valve member (20;120;120') which is journaled to the base body (11,111,111') of the first connector,
wherein the rotary valve member (20;120,120')- in a first angular position thereof relative to the base body (11,111,111') of the first connector- closes the chamber (2) of the bag (1),
wherein the rotary valve member (20;120,120') comprises a first coupling portion (21; 150) which - when the valve member (20;120,120') is in its first angular position - is adapted to couple directly to a second coupling portion (44a;151) on the second connector (40;140) upon said axial insertion of the one of the first and second connectors into a bore (12; 112) of the other connector,
wherein - upon said rotation over an angle of said inserted connector relative to said other connector to said final connected position - the rotary valve member (20;120;120') is held stationary in angular direction relative to the second connector (40;140) by the cooperating first and second coupling portions (21, 44a;150,151) and is thus rotated to a second angular position relative to the base body (11;111,111") of the first connector (10;110,110'),
wherein the rotary valve member (20;120,120') is embodied to provide - in the second angular position - communication between the product filled chamber (2) and the internal channel (41) in the second connector (40;140) allowing for discharge of the product from the chamber (2) into the internal channel (41) and there along to the outlet of said internal channel.

2. System according to claim 1, wherein the first connector is a female connector (10;110,110') and the second connector is a male connector (40;140), and wherein the first connector comprises a bore (12;112) into which the male connector (40;140) is insertable in axial direction via an insertion opening (12a) of the bore, and wherein the rotary valve member (20;120;120') is journaled in said bore (12;112), and wherein the first coupling portion (21 ;150) of the rotary valve member - when the valve member is in its first angular position - is adapted to couple directly to a second coupling portion (44a;151) on the male connector (40;140) upon of insertion of the male member into the bore (12;112) in the axial direction.

3. System according to claim 1 or 2, wherein the first connector (10;110,110') has a base body (11;111;111') that is secured to the bag and that is provided with at least one port (14;114;114') that adjoins the chamber (2) of the bag (1), and wherein the rotary valve member (20;120;120') comprises a passage (23) which in the first angular position is not in aligned with the base body port (14;114,114') and which in the second angular position is aligned with the base body port.

4. System according to claim 3, wherein the rotary valve member (20;120;120') has a tubular body part (23;123) that is journaled within the base body (11 ;111,111') of the first connector, which tubular body part is open at an end facing the second connector (40;140), and which is closed by a top wall (24;124) at the other end, wherein one or more ports (25;125) are formed laterally in the tubular body part (23;123), and wherein the one or more ports (14;114) in the base body (11;111) are each aligned with a port (25;125) in the tubular body part in the second angular position of the rotary valve member (20;120).

5. System according to claim 4, wherein the rotary valve member (20) comprises an annular skirt (26) extending around the tubular body part (23) at an the end thereof facing the second connector (10), a gap (27) being present between said annular skirt (26) and the tubular body part (23), into which gap an end region of the second connector (40) is inserted during axial insertion of the second connector (40) into a bore (12) of the first connector, wherein, preferably, a face (28) of the tubular body part (23) that is adapted to extend into the second connector (40) and a face of the second connector (40) are embodied as sealing faces so as to form a seal when the connectors are interconnected.

6. System according to one or more of the preceding claims, wherein the second connector has at least one bayonet connector slot (44), preferably two bayonet connector slots (44) at diametrically opposed locations of the second connector (40), preferably said at least one bayonet connector slot being located in an exterior surface of the second connector, and wherein the first connector has one or more corresponding bayonet pins (13), each slot (44) having an axial slot section (44a) and a circumferential slot section (44b), preferably wherein the circumferential slot section is provided with a retaining obstacle (44c), e.g. a dam, over or along which the pin (13) is urged during relative rotation of the first and first connectors, which dam provides resistance against reverse motion that releases the connectors (10,40).

7. System according to claim 6, wherein the rotary valve member (20) comprises one or more, preferably two at diametrically opposed locations, coupling bosses (21) which each are, when seen in axial insertion direction of the connectors (10,40), axially aligned with a bayonet pin (13) and behind said pin (13) when in the first angular position, the coupling boss (21) being arranged such that - when the one connector is axially inserted into the other connector - the coupling boss (21) enters the axial slot section (44a) and remains in said axial slot section (44a), whereas the bayonet pin (13) becomes aligned with the circumferential slot section (44b) so as to allow for a subsequent relative rotation between the connectors (10,40) in order to establish the bayonet connection.

8. System according to claims 5 and 6, wherein the skirt (26) of the rotary valve member has an abutment portion (26a), that abuts in circumferential direction against a bayonet pin (13) of the first connector (10) when the rotary valve member (20) is in its first angular position.

9. System according to claim 2, wherein the rotary valve (120;120') has a tubular body part (123) that is open at an end facing the insertion opening for the male connector (140) and has a top wall (124) at the other end of the tubular body part, and wherein coupling portion of the rotary valve member is formed by one or more axially protruding bosses (150) at the open end of the tubular body, which - when the rotary valve member is in its first angular position - are adapted to couple directly to the second coupling portion on the inserted male connector (140), for example one or more recesses (151) thereon which each receive a boss therein upon axial insertion of the male member into the bore in the axial direction, and wherein, preferably, each coupling boss (150) has beveled sides and each coupling recess (151) has corresponding beveled sides enhancing the introduction of a boss into a recess.

10. System according to claim 2, wherein the rotary valve (120;120') has a tubular body part (123) that is open at an end facing the insertion opening for the male connector (140) and has a top wall (124) at the other end of the tubular body part, and wherein the male connector has a forward tubular portion (142) at a forward end of the connector that is adapted to sealing fit into a tubular body part (123) of the rotary valve member, and wherein, preferably, said forward tubular portion (142) is provided on its exterior with one or more circumferential sealing ribs (143) that provide a seal with the interior of the tubular body part (123).

11. System according to claim 2, wherein the male connector (140) has a forward tubular portion (142) at a forward end of the connector that is adapted to sealing fit into a tubular body part (123) of the rotary valve member and wherein the male connector has, rearward from the forward tubular portion (142), said first coupling portion (151), e.g. formed by one or more recesses (151), which first coupling portion is adapted to cooperate with a second coupling portion (150) of the rotary valve member (120;120'), e.g. formed by one or more axially protruding bosses (151) at the open end of the tubular body part of the rotary valve member.

12. System according to one or more of the preceding claims, wherein the second connector (40) is provided with an inlet valve (48) in the internal channel (41) thereof, which inlet valve is normally closed and which is adapted to be opened by interconnection of the first and first connector or, alternatively, by product flow from the bag into the channel of the second connector.

13. System according to claim 1, wherein the transfer member (30;100) comprises a plate body part, preferably a curved plate body part, e.g. semi-cylindrical, from which the male connector (40;140) protrudes.

14. System according to claim 1 or 13, wherein the transfer member (30; 100) is embodied as a joint or terminal end housing member (30) that is adapted to form by itself or in combination with one or more additional housing members (32,33) a joint or terminal end housing in which a cable or pipe joint or a cable or pipe terminal end is received, e.g. of electrical cable(s), optical cable(s), or of pipe(s), which housing is to be filled with the resin compound to embed the joint or terminal end therein, e.g. wherein the joint or terminal end housing further comprises an open structure gauze (32) that is adapted to be wound around the elements to be joined or to be terminated, the housing further comprising a plastic tape (33) that is to be applied to form a liquid-tight outer envelope of the housing, wherein the resin compound is to be supplied via the transfer member (30).

15. Method for establishing a joint or end terminal of one or more cables, e.g. electrical or optical cables, wherein use is made of a system according to one or more of the preceding claims, wherein the bag is filled with an electrically insulating resin compound.

## Patentansprüche

1. System zum Packen und Verbinden einer wegwerfbaren und zusammenlegbaren Tüte, umfassend:
- eine wegwerfbare und zusammenlegbare Tüte (1) mit mindestens einer Kammer (2), welche mit einem fließbaren Harzverbindungsprodukt, z.B. einem elektrisch isolierenden Harzverbindungsprodukt gefüllt ist, wobei die Tüte ausgestaltet ist, um ausgequetscht zu werden, um die Harzverbindung aus der Kammer hinaus zu drängen, einem ersten Verbinder (10; 110; 110'), um das Produkt von der mindestens einen Kammer (2) der Tüte zu verteilen, wobei der erste Verbinder (10; 110; 110') einen Basiskörper (11; 111; 111') aufweist, welcher an der Tüte befestigt ist,
- einen zweiten Verbinder (40; 140), welcher auf einem Harzverbindungs-Übertragungsteil (30; 100) vorhanden ist, wobei das Übertragungsteil (30; 100) einen Innenkanal (41) zum Durchfluss der Harzverbindung aufweist, welche von der Tüte (1) durch Hinausdrängen verteilt wird, wobei der Kanal (41) einen Auslass aufweist, wobei der zweite Verbinder (40; 140) lösbar mit dem ersten Verbinder verbindbar ist,
**dadurch gekennzeichnet,**
**dass** der erste Verbinder (10; 110; 110') einen ersten Bajonettverbindungsabschnitt (13; 144) umfasst und der zweite Verbinder (40; 140) einen zweiten Bajonettverbindungsabschnitt (44, 44a, 44b; 113) umfasst, so dass der erste und der zweite Verbinder (10, 40; 110, 140; 110', 143) verbindbar sind durch eine axiale Einführung des ersten oder des zweiten Verbinders in eine Bohrung (12; 112) des anderen Verbinders, gefolgt von einer Drehung des eingeführten Verbinders (40; 140) relativ zu dem anderen Verbinder (10; 110; 110') um einen Winkel, so dass der erste und der zweite Bajonettverbindungsabschnitt eine Endverbindungsposition erreichen,
wobei der erste Verbinder (10; 110; 110') ein Drehventilteil (20; 120; 120') umfasst, welches an dem Basiskörper (11, 111, 111') des ersten Verbinders gelagert ist,
wobei das Drehventilteil (20; 120, 120') - in einer ersten Winkelposition davon relativ zu dem Basiskörper (11, 111, 111`) des ersten Verbinders - die Kammer (2) der Tüte (1) verschließt,
wobei das Drehventilteil (20; 120, 120') einen ersten Koppelabschnitt (21; 150) umfasst, welcher - wenn sich das Ventilteil (20; 120, 120') in seiner ersten Winkelposition befindet - ausgestaltet ist, um direkt mit einem zweiten Koppelabschnitt (44a; 145) auf dem zweiten Verbinder (40; 140) nach der axialen Einführung des ersten oder zweiten Verbinders in eine Bohrung (12; 112) des anderen Verbinders gekoppelt zu werden,
wobei - nach der Drehung des eingeführten Verbinders um einen Winkel relativ zu dem anderen Verbinder zu der Endverbindungsposition - das Drehventilteil (20; 120; 120') durch das Zusammenwirken des ersten und zweiten Koppelabschnitts (21, 44a; 150, 151) stationär in einer Winkelrichtung relativ zu dem zweiten Verbinder (40; 140) gehalten wird und daher in eine zweite Winkelposition relativ zu dem Basiskörper (11; 111, 111 ") des ersten Verbinders (10; 110, 110') gedreht wird,
wobei das Drehventilteil (20; 120, 120') ausgestaltet ist, um - in der zweiten Winkelposition - eine Kommunikation zwischen der mit dem Produkt gefüllten Kammer (2) und dem Innenkanal (41) in dem zweiten Verbinder (40; 140) bereitzustellen, was ein Entladen des Produktes von der Kammer (2) in den Innenkanal (41) und dort entlang zu dem Auslass des Innenkanals ermöglicht.

2. System nach Anspruch 1, wobei der erste Verbinder ein weiblicher Verbinder (10; 110, 110') und der zweite Verbinder ein männlicher Verbinder (40; 140) ist, und wobei der erste Verbinder eine Bohrung (12; 112) umfasst, in welche der männliche Verbinder (40; 140) in einer axialen Richtung über eine Einführungsöffnung (12a) der Bohrung einführbar ist, und wobei das Drehventilteil (20; 120; 120') in der Bohrung (12; 112) gelagert ist, und wobei der erste Koppelabschnitt (21; 150) des Drehventilteils - wenn sich das Ventilteil in seiner ersten Winkelposition befindet - ausgestaltet ist, um sich direkt mit einem zweiten Koppelabschnitt (44a; 151) auf dem männlichen Verbinder (40; 140) nach einer Einführung des männlichen Teils in die Bohrung (12; 112) in der axialen Richtung zu koppeln.

3. System nach Anspruch 1 oder 2, wobei der erste Verbinder (10; 110, 110') einen Basiskörper (11; 111; 111') aufweist, welcher an der Tüte befestigt ist und welcher mit mindestens einem Zugang (14; 114; 114'), der an der Kammer (2) der Tüte (1) angrenzt, versehen ist und wobei das Drehventilteil (20; 120; 120') einen Durchgang (23) umfasst, welcher in der ersten Winkelposition nicht mit dem Basiskörperzugang (14; 114, 114') ausgerichtet ist und welcher in der zweiten Winkelposition mit dem Basiskörperzugang ausgerichtet ist.

4. System nach Anspruch 3, wobei das Drehventilteil (20; 120; 120') ein röhrenförmiges Körperteil (23; 123) aufweist, welches in dem Basiskörper (11; 111, 111') des ersten Verbinders gelagert ist, wobei das röhrenförmige Körperteil an einem Ende offen ist, welches nach dem zweiten Verbinder (40; 140) gerichtet ist, und durch eine Oberwand (24; 124) an dem anderen Ende geschlossen ist, wobei ein oder mehrere Zugänge (25; 125) seitlich in dem röhrenförmigen Körperteil (23; 123) ausgebildet sind, und wobei der eine oder die mehreren Zugänge (14; 114) in dem Basiskörper (11; 111) jeweils mit einem Zugang (25; 125) in dem röhrenförmigen Körperteil in der zweiten Winkelposition des Drehventilteils (20; 120) ausgerichtet sind.

5. System nach Anspruch 4, wobei das Drehventilteil (20) einen ringförmigen Rand (26) umfasst, welcher sich um das röhrenförmige Körperteil (23) herum an dem Ende davon erstreckt, welches dem zweiten Verbinder (10) gegenüberliegt,
wobei eine Lücke (27) zwischen dem kreisförmigen Rand (26) und dem röhrenförmigen Körperteil (23) vorhanden ist, wobei in die Lücke ein Endbereich des zweiten Verbinders während einer axialen Einführung des zweiten Verbinders (40) in eine Bohrung (12) des ersten Verbinders eingeführt wird, wobei vorzugsweise eine Fläche (28) des röhrenförmigen Körperteils (23), welche ausgestaltet ist, um sich in den zweiten Verbinder (40) zu erstrecken, und eine Fläche des zweiten Verbinders (40) als Dichtungsflächen ausgestaltet sind, um so eine Dichtung auszubilden, wenn die Verbinder verbunden sind.

6. System nach einem oder mehreren der vorhergehenden Ansprüche, wobei der zweite Verbinder mindestens einen Bajonettverbindungsschlitz (44), vorzugsweise zwei Bajonettverbindungsschlitze (44) an diametral gegenüberliegenden Stellen des zweiten Verbinders (40), aufweist, wobei vorzugsweise der mindestens eine Bajonettverbindungsschlitz in einer Außenfläche des zweiten Verbinders angeordnet ist und wobei der erste Verbinder einen oder mehrere entsprechende Bajonettstifte (13) aufweist, wobei jeder Schlitz (44) einen axialen Schlitzabschnitt (44a) und einen Umfangsschlitzabschnitt (44b) aufweist, wobei vorzugsweise der Umfangsschlitzabschnitt mit einem Zurückhaltehemmnis (44c), z.B. einem Damm, versehen ist, über oder entlang welchem der Stift (13) während einer Relativbewegung des ersten und zweiten Verbinders angetrieben wird, wobei der Damm für einen Widerstand gegen eine Umkehrbewegung sorgt, welche die Verbinder (10, 40) löst.

7. System nach Anspruch 6, wobei das Drehventilteil (20) einen oder mehrere, vorzugsweise zwei an diametral gegenüberliegenden Stellen, Koppelvorsprünge (21) umfasst, welche, wenn man sie in einer axialen Einführungsrichtung der Verbinder (10, 40) betrachtet, axial mit einem Bajonettstift (13) und hinter dem Stift (13), wenn man sich in der ersten Winkelposition befindet, ausgerichtet sind, wobei der Koppelvorsprung (21) so angeordnet ist, dass - wenn der eine Verbinder axial in den anderen Verbinder eingeführt wird - der Koppelvorsprung (21) in den axialen Schlitzabschnitt (44a) eindringt und in dem axialen Schlitzabschnitt (44a) verbleibt, wobei der Bajonettstift (13) mit dem Umfangsschlitzabschnitt (44b) ausgerichtet wird, um so eine folgende Relativbewegung zwischen den Verbindern (10, 40) zu ermöglichen, um die Bajonettverbindung herzustellen.

8. System nach den Ansprüchen 5 und 6, wobei der Rand (26) des Drehventilteils einen Anschlagabschnitt (26a) aufweist, welcher in Umfangsrichtung gegen einen Bajonettstift (13) des ersten Verbinders (10) stößt, wenn sich das Drehventilteil (20) in seiner ersten Winkelposition befindet.

9. System nach Anspruch 2, wobei das Drehventil (120; 120') ein röhrenförmiges Körperteil (123) aufweist, welches an einem Ende offen ist, das der Einführungsöffnung für den männlichen Verbinder (140) gegenüberliegt, und eine Oberwand (124) an dem anderen Ende des röhrenförmigen Körperteils aufweist, und wobei der Koppelabschnitt des Drehventilteils durch einen oder mehrere axial hervorragende Vorsprünge (150) an dem offenen Ende des röhrenförmigen Körpers ausgebildet ist, welche - wenn sich das Drehventilteil in seiner ersten Winkelposition befindet - ausgestaltet sind, um sich direkt mit dem zweiten Koppelabschnitt auf dem eingeführten männlichen Verbinder (140) zu koppeln, zum Beispiel mit einer oder mehreren Vertiefungen (151) darauf, welche jeweils einen Vorsprung darin nach einer axialen Einführung des männlichen Verbinders in die Bohrung in der axialen Richtung aufnehmen, und wobei vorzugsweise jeder Koppelvorsprung (150) abgeflachte Seiten aufweist und jede Koppelvertiefung (151) entsprechende abgeflachte Seiten aufweist, welche die Einführung eines Vorsprungs in eine Vertiefung verbessern.

10. System nach Anspruch 2, wobei das Drehventil (120; 120') ein röhrenförmiges Körperteil (123) aufweist, welches an einem Ende, das der Einführungsöffnung für den männlichen Verbinder (140) gegenüberliegt, offen ist und eine Oberwand (124) an dem anderen Ende des röhrenförmigen Körperteils aufweist, und wobei der männliche Verbinder einen röhrenförmigen Vorwärtsabschnitt (142) an einem Vorwärtsende des Verbinders aufweist, welches ausgestaltet ist, um sich abdichtend in einen röhrenförmigen Körperteil (123) des Drehventilteils einzupassen, und
wobei der röhrenförmige Vorwärtsabschnitt (142) vorzugsweise auf seinem Äußeren mit einer oder mit mehreren Umfangsdichtrippen (143) versehen ist, welche eine Dichtung mit dem Inneren des röhrenförmigen Körperteils (123) bereitstellen.

11. System nach Anspruch 2, wobei der männliche Verbinder (140) einen röhrenförmigen Vorwärtsabschnitt (142) an einem Vorwärtsende des Verbinders aufweist, welches ausgestaltet ist, um abdichtend in einen röhrenförmigen Körperteil (123) des Drehventilteils eingepasst zu sein, und wobei der männliche Verbinder rückwärtig von dem röhrenförmigen Vorwärtsabschnitt (142) den ersten Koppelabschnitt (151) aufweist, welcher z.B. durch eine oder mehrere Vertiefungen (151) ausgebildet ist, wobei der erste Koppelabschnitt ausgestaltet ist, um mit einem zweiten Koppelabschnitt (150) des Drehventilteils (120; 120') zusammenzuwirken, welcher z.B. durch einen oder mehrere axial hervorragende Vorsprünge (151) an dem offenen Ende des röhrenförmigen Körperteils des Drehventilteils ausgebildet ist.

12. System nach einem oder mehreren der vorhergehenden Ansprüche, wobei der zweite Verbinder (40) mit einem Einlassventil (48) in dem Innenkanal (41) davon versehen ist, wobei das Einlassventil normalerweise geschlossen ist und ausgestaltet ist, um durch eine Verbindung des ersten und des zweiten Verbinders oder alternativ durch einen Produktfluss von der Tüte in den Kanal des zweiten Verbinders geöffnet zu werden.

13. System nach Anspruch 1, wobei das Übertragungsteil (30; 100) ein Plattenkörperteil, vorzugsweise ein gebogenes Plattenkörperteil, z.B. ein halbzylindrisches, umfasst, von welchem der männliche Verbinder (40; 140) hervorragt.

14. System nach Anspruch 1 oder 13, wobei das Übertragungsteil (30; 100) als eine Verbindung oder ein Anschlussendgehäuseteil (30) ausgestaltet ist, welches ausgestaltet ist, um durch sich selbst oder in Kombination mit einem oder mit mehreren weiteren Gehäuseteilen (32, 33) eine Verbindung oder ein Anschlussendgehäuse auszubilden, in welches ein Kabel oder eine Leitungsverbindung oder ein Kabel oder ein Leitungsanschlussende aufgenommen ist, z.B. von (einem) elektrischen Kabel(n), (einem) optischen Kabel(n) oder (einer) Leitung(en), wobei das Gehäuse mit der Harzverbindung zu füllen ist, um die Verbindung oder das Anschlussende darin einzubetten, wobei z.B. die Verbindung oder das Anschlussendgehäuse darüber hinaus eine offene Strukturgase (32) umfasst, welche ausgestaltet ist, um um die Elemente herum gewunden zu werden, welche zu verbinden oder abzuschließen sind, wobei das Gehäuse darüber hinaus ein Kunststoffband (33) umfasst, welches aufzubringen ist, um eine flüssigkeitsdichte Außenumhüllung des Gehäuses auszubilden, wobei die Harzverbindung über das Übertragungsteil (30) zuzuführen ist.

15. Verfahren zum Herstellen einer Verbindung oder eines Endanschlusses von einem oder mehreren Kabeln, z.B. elektrischen oder optischen Kabeln, wobei ein System nach einem oder mehreren der vorhergehenden Ansprüche eingesetzt wird, wobei die Tüte mit einer elektrisch isolierenden Harzverbindung gefüllt ist.

## Revendications

1. Système d'ensachage et de connecteur compressible et jetable comprenant :
- un sachet compressible et jetable (1), ayant au moins au chambre (2) remplie avec un produit de composé de résine fluide, comme par exemple un produit de composé de résine électriquement isolante, le sachet étant adapté pour être comprimé afin d'expulser le composé de résine de la chambre, un premier connecteur (10 ; 110 ; 110') destiné à distribuer le produit depuis la chambre (2) au moins du sachet, le premier connecteur (10 ; 110; 110') ayant un corps de base (11 ; 11 ; 111') qui est fixé sur le sachet,
- un second connecteur (40 ; 140) prévu sur un élément de transfert de composé de résine (30 ; 100), ledit élément de transfert (30 ; 100) ayant un canal interne (41) pour le passage du composé de résine qui est expulsé du sachet (1) par écrasement, ledit canal (41) ayant une évacuation, ledit second connecteur (40 ; 140) étant relié de manière amovible au premier connecteur,
**caractérisé en ce que**
le premier connecteur (10 ; 110; 110') comprend une première partie de raccordement à baïonnette (13 ; 144) et le second connecteur (40 ; 140) comprend une seconde partie de raccordement à baïonnette (44, 44a, 44b ; 113), de sorte que le premier et le second connecteurs (10, 40; 110, 140; 110', 143) soient interconnectables par insertion axiale de l'un du premier et du second connecteurs dans un orifice (12 ; 112) de l'autre connecteur, suivie par une rotation sur un angle dudit connecteur inséré (40 ; 140) par rapport audit autre connecteur (10 ; 110; 110') de sorte que la première et la seconde parties de raccordement à baïonnette atteignent une position raccordée finale,
dans lequel le premier connecteur (10 ; 110 ; 110') comprend un élément de clapet rotatif (20 ; 120 ; 120') qui est tourillonné sur le corps de base (11, 111, 111') du premier connecteur,
dans lequel l'élément de clapet rotatif (20 ; 120 ; 120') - dans une première position angulaire celle-ci par rapport au corps de base (11, 111, 111') du premier connecteur - ferme la chambre (2) du sachet (1),
dans lequel l'élément de clapet rotatif (20 ; 120, 120') comprend une première partie de raccordement (21 ; 150) qui - lorsque l'élément de clapet rotatif (20 ; 120 ; 120') se trouve dans sa première position angulaire - est adaptée pour se relier directement à une seconde partie de raccordement (44a ; 151) sur le second connecteur (40 ; 140) lors de ladite insertion axiale de l'un du premier et du second connecteurs dans l'orifice (12 ; 112) de l'autre connecteur,
dans lequel - lors de ladite rotation sur un angle dudit connecteur inséré par rapport audit autre connecteur par rapport à ladite position raccordée finale - l'élément de clapet rotatif (20 ; 120 ; 120') est maintenu stationnaire dans une direction angulaire par rapport au second connecteur (40 ; 140) grâce à la coopération entre la première et la seconde parties de raccordement (21, 44a ; 150, 151), et est ainsi tourné dans une seconde position angulaire par rapport au corps de base (11 ; 111, 111") du premier connecteur (10 ; 110, 110'),
dans lequel l'élément de clapet rotatif (20 ; 120, 120') est conçu pour assurer - dans la seconde position angulaire - une communication entre la chambre remplie de produit (2) et le canal interne (41) dans le second connecteur (40 ; 140), ce qui permet l'évacuation du produit de la chambre (2) vers le canal interne (41), et le long de l'évacuation dudit canal interne.

2. Système selon la revendication 1, dans lequel le premier connecteur est un connecteur femelle (10 ; 110, 110') et le second connecteur est un connecteur mâle (40 ; 140), et dans lequel le premier connecteur comprend un orifice (12 ; 112) dans lequel le connecteur mâle (40 ; 140) peut être inséré dans une direction axiale par le biais d'une ouverture d'insertion (12a) de l'orifice, et dans lequel l'élément de clapet rotatif (20 ; 120 ; 120') est tourillonné dans ledit orifice (12 ; 112), et dans lequel la première partie de raccordement (21 ; 150) de l'élément de clapet rotatif - lorsque l'élément de clapet se trouve dans sa première position angulaire - est adaptée pour être reliée directement à la seconde partie de raccordement (44a ; 151) sur le connecteur mâle (40 ; 140) lors de l'insertion de l'élément mâle dans l'orifice (12 ; 112) dans la direction sens axiale.

3. Système selon la revendication 1 ou 2, dans lequel le premier connecteur (10 ; 110, 110') possède un corps de base (11 ; 111 ; 111') qui est fixé sur le sachet et qui est muni d'au moins un port (14 ; 114 ; 114') adjacent à la chambre (2) du sachet (1), et dans lequel l'élément de clapet rotatif (20 ; 120 ; 120') comprend un passage (23) qui, dans la première position angulaire, n'est pas aligné avec le port du corps de base (14 ; 114; 114') et qui, dans la seconde position angulaire, est aligné avec le port du corps de base.

4. Système selon la revendication 3, dans lequel l'élément de clapet rotatif (20 ; 120 ; 120') possède une partie de corps tubulaire (23 ; 123) tourillonnée à l'intérieur du corps de base (11 ; 111 ; 111') du premier connecteur, ladite partie de corps tubulaire étant ouverte au niveau d'une extrémité qui fait face au second connecteur (40 ; 140), et étant fermée par une paroi supérieure (24 ; 124) à l'autre extrémité, un ou plusieurs port(s) (25 ; 125) étant formé(s) latéralement dans la partie de corps tubulaire (23 ; 123), et dans lequel le ou les port(s) (14 ; 114) du corps de base (11 ; 111) sont chacun alignés avec un port (25 ; 125) dans la partie de corps tubulaire dans la seconde position angulaire de l'élément de clapet rotatif (20 ; 120).

5. Système selon la revendication 4, dans lequel l'élément de clapet rotatif (20) comprend une jupe annulaire (26) qui s'étend autour de la partie de corps tubulaire (23) au niveau d'une extrémité de celle-ci tournée vers le second connecteur (10), un espace (27) étant présent entre ladite jupe annulaire (26) et la partie de corps tubulaire (23), une zone d'extrémité du second connecteur (40) étant insérée dans ledit espace pendant l'insertion axiale du second connecteur (40) dans un orifice (12) du premier connecteur, dans lequel, de préférence, une face (28) de la partie de corps tubulaire (23) qui est adaptée pour s'étendre dans le second connecteur (40) et une face du second connecteur (40) sont utilisées comme faces d'étanchéité afin de former un joint lorsque les connecteurs sont interconnectés.

6. Système selon une ou plusieurs des revendications précédentes, dans lequel le second connecteur possède au moins une fente de raccordement à baïonnette (44), de préférence deux fentes de raccordement à baïonnette (44), à des emplacements diamétralement opposés du second connecteur (40), ladite fente de raccordement à baïonnette au moins étant de préférence située dans une surface externe du second connecteur, et dans lequel le premier connecteur possède une ou plusieurs broche(s) à baïonnette correspondante(s) (13), chaque fente (44) ayant une section de fente axiale (44a) et une section de fente circonférentielle (44b), la section de fente circonférentielle étant de préférence munie d'un frein de retenue (44c), comme par exemple un obstacle, au-dessus ou le long duquel la broche (13) est sollicitée pendant la rotation relative du premier et du second connecteurs, ledit obstacle assurant une résistance au mouvement inverse qui libère les connecteurs (10, 40).

7. Système selon la revendication 6, dans lequel l'élément de clapet rotatif (20) comprend un ou plusieurs, de préférence deux à des emplacements diamétralement opposés, bossage(s) de raccordement (21) qui sont chacun, lorsqu'ils sont vus dans une direction d'insertion axiale des connecteurs (10, 40), alignés de façon axiale avec une broche à baïonnette (13) et derrière ladite broche (13) dans la première position angulaire, le bossage de raccordement (21) étant prévu de sorte que - lorsque le premier connecteur est inséré de façon axiale dans l'autre connecteur - le bossage de couplage (21) pénètre dans la section de fente axiale (44a) et reste dans cette même section de fente axiale (44a), tandis que la broche à baïonnette (13) s'aligne avec la section de fente circonférentielle (44b) afin de permettre une rotation relative ultérieure entre les connecteurs (10, 40) de façon à assurer le raccordement à baïonnette.

8. Système selon les revendications 5 et 6, dans lequel la jupe (26) de l'élément de clapet rotatif possède une partie de butée (26a), qui vient buter, dans une direction circonférentielle, contre une broche à baïonnette (13) du premier connecteur (10) lorsque l'élément de clapet rotatif (20) se trouve dans sa première position angulaire.

9. Système selon la revendication 2, dans lequel le clapet rotatif (120 ; 120') possède une partie de corps tubulaire (123) qui est ouverte au niveau d'une extrémité qui fait face à l'ouverture d'insertion pour le connecteur mâle (140) et possède une paroi supérieure (124) au niveau de l'autre extrémité de la partie de corps tubulaire, et dans lequel la partie de raccordement de l'élément de clapet rotatif est formée par un ou plusieurs bossage(s) en saillie axiaux/axiaux (150) au niveau de l'extrémité ouverte du corps tubulaire, qui - lorsque l'élément de clapet rotatif se trouve dans sa première position angulaire - est/sont adapté(s) pour être relié(s) directement à la seconde partie de raccordement sur le connecteur mâle inséré (140), comme par exemple un ou plusieurs renfoncement(s) (151) chacun d'entre eux recevant un bossage lors de l'insertion axiale de l'élément mâle dans l'orifice dans la direction axiale, et dans lequel, de préférence, chaque bossage de raccordement (150) possède des côtés biseautés, et chaque renfoncement de raccordement (151) possède des côtés biseautés correspondants qui améliorent l'introduction d'un bossage dans un renfoncement.

10. Système selon la revendication 2, dans lequel le clapet rotatif (120 ; 120') possède une partie de corps tubulaire (123) qui est ouverte au niveau d'une extrémité qui fait face à l'ouverture d'insertion pour le connecteur mâle (140), et possède une paroi supérieure (124) au niveau de l'autre extrémité de la partie de corps tubulaire, et dans lequel le connecteur mâle possède une partie tubulaire avant (142) au niveau d'une extrémité avant du connecteur, qui est adaptée pour s'ajuster de façon étanche dans une partie de corps tubulaire (123) de l'élément de clapet rotatif, et dans lequel, de préférence, ladite partie tubulaire avant (142) est munie, sur son extérieur, d'une ou plusieurs nervure(s) d'étanchéité circonférentielle(s) (143) qui assure(nt) un joint avec l'intérieur de la partie de corps tubulaire (123).

11. Système selon la revendication 2, dans lequel le connecteur mâle (140) possède une partie tubulaire avant (142) au niveau d'une extrémité avant du connecteur, qui est adaptée pour s'ajuster de façon étanche dans une partie de corps tubulaire (123) de l'élément de clapet rotatif, et dans lequel le connecteur mâle possède, vers l'arrière de la partie tubulaire avant (142), ladite première partie de raccordement (151), formée par exemple d'un ou plusieurs renfoncement(s) (151), ladite première partie de raccordement étant adaptée pour coopérer avec une seconde partie de raccordement (150) de l'élément de clapet rotatif (120 ; 120'), formée par exemple d'un ou plusieurs bossage(s) en saillie axiale (151) au niveau de l'extrémité ouverte de la partie de corps tubulaire de l'élément de clapet rotatif.

12. Système selon une ou plusieurs des revendications précédentes, dans lequel le second connecteur (40) est muni d'un clapet d'entrée (48) dans le canal interne (41) de celui-ci, ledit clapet d'entrée étant normalement fermé et étant adapté pour être ouvert par l'interconnexion du premier et du second connecteurs, ou, en variante, par l'écoulement du produit du sachet vers le canal du second connecteur.

13. Système selon la revendication 1, dans lequel l'élément de transfert (30 ; 100) comprend une partie de corps de plaque, de préférence une partie de corps de plaque incurvée, comme par exemple semi-cylindrique, à partir de laquelle le connecteur mâle (40 ; 140) fait saillie.

14. Système selon la revendication 1 ou 13, dans lequel l'élément de transfert (30 ; 100) est conçu comme un joint ou un logement d'extrémité terminale (30) qui est adapté pour former, par lui-même ou en combinaison avec un ou plusieurs élément(s) de logement(s) supplémentaire(s) (32, 33), un joint ou un logement d'extrémité terminale dans lequel un câble ou un joint de tuyau, ou un câble ou une extrémité terminale de tuyau, est reçu(e), comme par exemple un/des câble(s) électriques, un/des câble(s) optique(s), ou un/des tuyau(x), ledit logement étant rempli avec le composé de résine afin d'intégrer le joint ou l'extrémité terminale, par exemple, le joint ou le logement d'extrémité terminale comprenant en outre, une gaze à structure ouverte (32) qui est adaptée pour être enroulée autour des éléments à joindre ou à terminer, le logement comprenant en outre une bande plastique (33) qui doit être appliquée afin de former une enveloppe externe étanche au liquide du logement, ledit composé de résine étant fourni par le biais de l'élément de transfert (30).

15. Procédé de création d'un joint ou d'une extrémité terminale d'un ou plusieurs câble(s), comme des câbles électriques ou optiques, dans lequel est utilisé un système selon une ou plusieurs des revendications précédentes, dans lequel le sachet est rempli de composé de résine électriquement isolante.
